# EUROPÄISCHE PATENTSCHRIFT

(11) **EP 1 306 292 B1**
(45) Veröffentlichungstag und Bekanntmachung des Hinweises auf die Patenterteilung: **06.09.2006**
(21) Anmeldenummer: 02019512.9
(22) Anmeldetag: 31.08.2002
(51) Int. Cl.: B62D 29/04, B62D 29/00, B29C 70/00, B32B 15/00

(54) **Trägerbauteil, insbesondere einer Tragstruktur eines Kraftfahrzeugs**
Carrying element, especially for a vehicule structure
Element porteur, en particulier pour une structure de véhicule

(30) Priorität: 16.10.2001 DE 10152649
(43) Veröffentlichungstag der Anmeldung: 02.05.2003
(73) Patentinhaber: Dr.Ing. h.c.F. Porsche Aktiengesellschaft, 70435 Stuttgart (DE)
(72) Erfinder: Henkel, Achim, 71696 Möglingen (DE); Moser, Frank, 76356 Weingarten (DE)

(56) Entgegenhaltungen:
- EP-A- 0 370 342
- EP-A- 1 084 816
- DE-A- 10 106 458
- WELCH T E ET AL: "COST AND PERFORMANCE BENEFITS FOR LAMINATED STEEL BODY" INGENIEURS DE L'AUTOMOBILE, RAIP. BOULOGNE, FR, Nr. 732, Oktober 1999 (1999-10), Seiten 34-36, XP000869015 ISSN: 0020-1200

## Beschreibung

Bei der Erfindung wird ausgegangen von einem Trägerbauteil, insbesondere einer Tragstruktur eines Kraftfahrzeugs, gemäß Oberbegriff des Anspruchs 1.

Ein die Gattung bildendes, auch als Strukturbauteil bezeichnetes Trägerbauteil ist aus der EP 0 370 342 A2 bekannt. Es besitzt einen schalenförmigen Grundkörper, an dessen Innenwand Verstärkungsrippen aus Kunststoff angespritzt sind. Die Wandung des Grundkörpers weist mehrere als Durchbrüche realisierte Ausnehmungen auf, die beim Anspritzen der Verstärkungsrippen mit dem Kunststoff gefüllt werden, der außerdem an der Außenwand des Grundkörpers als Querschnittserweiterung ausgeformt wird, wodurch erst die Verstärkungsrippen an dem Grundkörper befestigt sind. Der bekannte Grundkörper umfasst ein Metallblech.

Aufgabe der Erfindung ist es, ein Trägerbauteil der eingangs genannten Art anzugeben, das bei geringerem Gewicht insbesondere den bei Fahrzeugen auftretenden mechanischen Beanspruchungen standhält.

Gelöst wird diese Aufgabe mit einem Trägerbauteil mit den in Anspruch 1 genannten Merkmalen. Weitere, die Erfindung ausgestaltende Merkmale enthalten die Unteransprüche.

Die mit der Erfindung hauptsächlich erzielten Vorteile sind darin zu sehen, dass durch den mehrschichtigen Aufbau des Grundkörper, beispielsweise als Sandwichblech bzw. > Laminat, eine Gewichtsersparnis gegenüber reinen Metallgrundkörpern gegeben ist. Im Vergleich zu Kunststoffgrundkörpern weist das erfindungsgemäße Trägerbauteil eine erhöhte Festigkeit bei geringerer Materialstärke auf. Als besonders günstig hat es sich herausgestellt, dass beim Anspritzen der Verstärkungsrippen der dafür verwendete Kunststoff mit der Kunststoffschicht des mehrschichtigen Grundkörpers eine Verbindung eingehen kann. Wird lediglich die die Innenwand des Grundkörpers bildende Metallschicht mit einer diese durchsetzenden Ausnehmung versehen, bleibt an der von der anderen Metallschicht gebildeten Außenwand des Grundkörpers die durchgehende Oberfläche erhalten, wodurch ein Eindringen einer Flüssigkeit, beispielsweise Wasser, zwischen die Metallschichen vermieden wird. Insbesondere zeichnet sich deshalb das erfindungsgemäße Trägerbauteil durch eine hohe Beständigkeit gegen Korrosion aus und ist daher besonders für den Kraftfahrzeugbau geeignet.

Selbstverständlich ist es gemäß Anspruch 2 möglich, die Ausnehmung durchgehend, also als Durchbruch auszubilden, welcher somit die Wandung des Grundkörpers vollständig durchsetzt. Der angespritzte Kunststoff kann daher mit einer an der Außenwand liegenden Querschnittserweiterung (Anspruch 3) versehen werden, um so eine besonders gute Verankerung der Verstärkungsrippen an dem Grundkörper zu erreichen. Selbstverständlich wird auch bei dieser Ausführungsvariante der angespritzte Kunststoff eine Verbindung mit der Kunststoffschicht des Grundkörpers eingehen können.

Wird der Kunststoff für die Verstärkungsrippen mit entsprechender Temperatur angespritzt, die beispielsweise so gewählt ist, dass ein Aufweichen bzw. Anschmelzen der Kunststoffschicht des Grundkörpers erfolgt, wird die Verbindung zwischen den Verstärkungsrippen und der Kunststoffschicht auf besonders einfache Art und Weise erzielt. Als besonders vorteilhaft hat es sich daher erwiesen, wenn - nach einer Weiterbildung der Erfindung entsprechend Anspruch 4 - sowohl die Verstärkungsrippen als auch die Kunststoffschicht aus demselben Kunststoff bestehen. Alternativ könnten auch verschiedene Kunststoffe, insbesondere mit artverwandter chemischer Struktur, verwendet werden, die vorzugsweise eine ähnliche Schmelztemperatur besitzen.

Die Erfindung wird nachfolgend anhand von Ausführungsbeispielen mit Bezug auf die Zeichnung näher erläutert.

Es zeigen:
- Fig. 1: eine perspektivische Ansicht eines Trägerbauteils einer Tragstruktur und
- Fig. 2: entlang der Linie II - II einen Schnitt durch das Trägerbauteil gemäß Fig. 1.

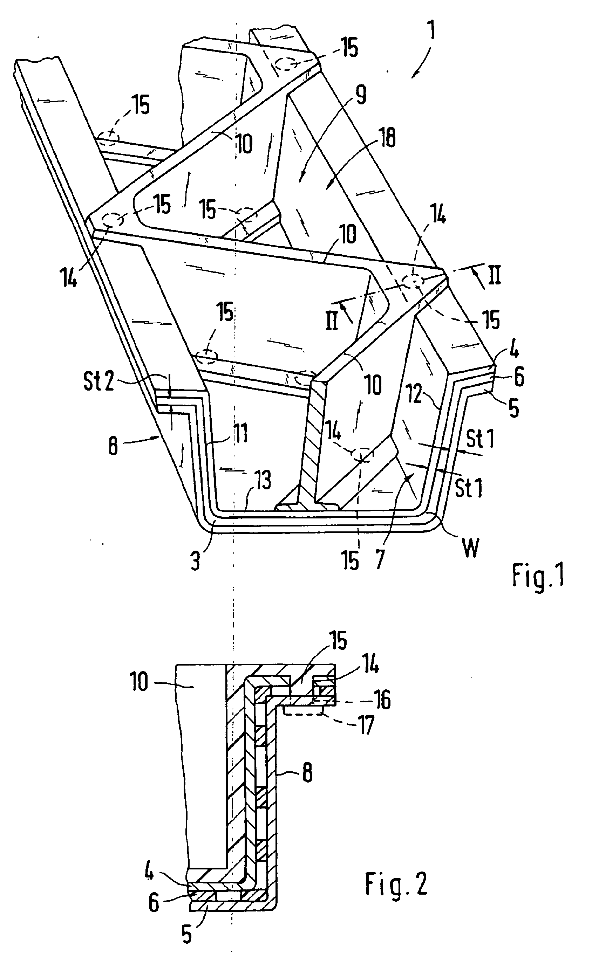

Die Fig. 1 zeigt ausschnittweise eine Tragstruktur 1, insbesondere für ein Kraftfahrzeug, welches hier nicht weiter dargestellt ist. Diese Tragstruktur 1 kann einem Tragrahmen für den Fahrzeugaufbau, einer Tür, einem Windschutzscheibenrahmen, einem Motorträger, einem Träger für Anbauteile oder dgl. des Kraftfahrzeugs zugeordnet sein.

Die Tragstruktur 1 umfasst zumindest ein Trägerbauteil 2, welches einen schalenförmigen Grundkörper 3 aufweist, dessen Querschnitt - wie dargestellt - im Wesentlichen U - förmig oder trapezförmig, einer Bogen- oder Kreislinie folgend, dreieckförmig oder dgl. sein kann. Der Grundkörper 3 ist mehrschichtig beispielsweise als Sandwichblech ausgeführt und umfasst mithin mehrere, die Wandung W des Grundkörpers 3 bildende Schichten, von denen zumindest zwei Schichten 4 und 5 Metallbleche, zum Beispiel aus Aluminium, sind, welche Schichten 4 und 5 zwischen sich eine Kunststoffschicht 6 aufnehmen. Die innere Metallschicht 4 bildet die Innenwand 7 und die äußere Metallschicht 5 die Außenwand 8 des Grundkörpers 3. In dem von der Innenwand 7 begrenzten Innenraum 9 des Grundkörpers 3 sind Verstärkungsrippen 10 aus Kunststoff angespritzt, die - wie dargestellt - zickzackartig oder parallel zueinander verlaufen oder ggf. sich schneiden können. Selbstverständlich ist auch eine Kombination aus zickzackartigen und parallel zueinander verlaufenden Verstärkungsrippen möglich. Im gezeigten Ausführungsbeispiel erstrecken sich die Verstärkungsrippen 10 schräg von einer aufrechten Innenfläche 11 zur anderen aufrechten Innenfläche 12 der Innenwand 7 und liegen außerdem am Innenboden 13 der Innenwand 7 an.

Für die Befestigung der Verstärkungsrippen 10 ist zumindest in die die Innenwand 7 bildende Metallschicht 4 wenigstens eine Ausnehmung 14 eingebracht, die diese Schicht 4 vollständig durchsetzt. Der Querschnitt der Ausnehmung 14 kann kreisförmig, oval, eckig oder dgl. sein. Beim Anspritzen des Kunststoffs für die Verstärkungsrippen 10 wird die Ausnehmung 14 mit diesem Kunststoff gefüllt, so dass innerhalb der Ausnehmung 14 ein Kunststoffstift 15 gebildet wird, der sich mit der Kunststoffschicht 6 des Grundkörpers verbindet, um so die Verstärkungsrippen 10 an dem Grundkörper 3 zu verankern. Vorteilhaft bei dieser Ausgestaltungsvariante ist, dass an die Außenwand 8 gelangende Flüssigkeit nicht zwischen die Metallschichten 4 und 5 eindringen kann, wodurch diese an ihrer der Kunststoffschicht 6 zugewandten Seite nicht der Gefahr einer Korrosion ausgesetzt sind.

Bei einem anderen in Fig. 2 gestrichelt dargestellten Ausführungsbeispiel kann die Ausnehmung durch die Wandung W, also durch sämtliche Schichten 4, 5 und 6 hindurch gehen und somit als Durchbruch 16 vorliegen, in dem beim Anbringen der Verstärkungsrippen 10 der sich mit der Kunststoffschicht 6 verbindende Kunststoffstift 15 ausgebildet wird. Zusätzlich wäre es denkbar, beim Spritzen der Verstärkungsrippen 10 den aus dem Durchbruch 16 austretenden Kunststoff so zu formen, dass sich an der Außenwand 8 des Grundkörpers eine Querschnittserweiterung 17 am Ende des Kunststoffstiftes 15 bildet, wodurch die Verstärkungsrippen 10 besonders sicher an dem Grundkörper 3 halten sind.

Die Stärke St1 der Metallschichten 4, 5 wird in Abhängigkeit der gewünschten Festigkeit des Trägerbauteils 2 gewählt und kann beispielsweise für Anwendungen im Kraftfahrzeugbereich 0,2 mm bis 0,6 mm betragen. Die Stärke St2 der Kunststoffschicht 6 kann so gewählt werden, dass ein Tiefziehen des Sandwichblechs für den Grundkörper 3 möglich ist. Ggf. könnte auch eine Kunststoffschicht 6 mit anderer Stärke St2 verwendet werden, beispielsweise wenn andere Umformtechniken des Sandwichblechs angewandt werden.

## Patentansprüche

1. Trägerbauteil (2), insbesondere einer Tragstruktur (1) eines Kraftfahrzeugs, mit einem schalenförmigen, Metall umfassenden Grundkörper (3), in dessen Innenraum (9) Verstärkungsrippen (10) aus angespritztem Kunststoff angeordnet sind, wobei der Grundkörper (3) an seiner Innenwand (7) wenigstens eine Ausnehmung (14) aufweist, die mit dem Kunststoff gefüllt ist, **dadurch gekennzeichnet, dass** der Grundkörper (3) aus mehreren Schichten (4, 5, 6) besteht, von denen zumindest zwei Metallschichten (4, 5) sind, die zwischen sich eine Kunststoffschicht (6) aufnehmen, dass die Ausnehmung (14) lediglich die die Innenwand (7) bildende Metallschicht (4) durchsetzt und dass an der anderen Metallschicht (5), die eine Außenwand (8) des Grundkörpers (3) bildet, eine durchgehende Oberfläche erhalten ist.

2. Trägerbauteil nach Anspruch 1, **dadurch gekennzeichnet, dass** die Verstärkungsrippen (10) und die Kunststoffschicht (6) des Grundkörpers (3) aus demselben Kunststoff bestehen.

3. Trägerbauteil nach Anspruch 1, **dadurch gekennzeichnet, dass** durch das Anspritzen der Verstärkungsrippen (10) an den Grundkörper (3) die Ausnehmung (14) mit dem Kunststoff gefüllt ist, so dass innerhalb der Ausnehmung (14) ein Kunststoffstift (15) gebildet ist, der mit der Kunststoffschicht (6) des Grundkörpers (3) verbunden ist, um die Verstärkungsrippen (10) an dem Grundkörper (3) zu verankern.

## Claims

1. A supporting component (2), especially of a supporting structure (1) of a motor vehicle, comprising a shell-type basic body (3) which comprises metal and in the interior (9) of which are arranged reinforcing ribs (10) of injection-moulded plastics, wherein the basic body (3) has, in its inner wall (7), at least one recess (14) which is filled with the plastics, **characterised in that** the basic body (3) comprises a plurality of layers (4, 5, 6), of which at least two are metal layers (4, 5) receiving a plastics layer (6) between them, **in that** the recess (14) only extends through the metal layer (4) forming the inner wall (7), and **in that** a continuous surface is maintained on the other metal layer (5) forming an outer wall (8) of the basic body (3).

2. A supporting component according to claim 1, **characterised in that** the reinforcing ribs (10) and the plastics layer (6) of the basic body (3) comprise the same plastics.

3. A supporting component according to claim 1, **characterised in that**, by injection-moulding the reinforcing ribs (10) onto the basic body (3), the recess (14) is filled with the plastics so that a plastics pin (15) is formed inside the recess (14) and is connected to the plastics layer (6) of the basic body (3) in order to anchor the reinforcing ribs (10) to the basic body (3).

## Revendications

1. Elément de support (2), en particulier d'une structure portante (1) d'un véhicule automobile, avec un corps de base (3) en forme de coque, entourant du métal, dans le volume intérieur (9) duquel sont disposées des nervures de renfort (10) en matière plastique venues de moulage par injection, le corps de base (3) présentant sur sa paroi intérieure (7) au moins un évidement (14) qui est rempli de matière plastique, **caractérisé en ce que** le corps de base (3) est constitué de plusieurs couches (4, 5, 6) dont au moins deux sont des couches métalliques (4, 5) qui reçoivent entre elles une couche de matière plastique (6), **en ce que** l'évidement (14) traverse uniquement la couche métallique (4) formant la paroi intérieure (7), et **en ce que** sur l'autre couche métallique (5), qui forme la paroi extérieure (8) du corps de base (3), est maintenue une surface continue.

2. Elément de support selon la revendication 1, **caractérisé en ce que** les nervures de renfort (10) et la couche de matière plastique (6) du corps de base (3) sont constituées de la même matière plastique.

3. Elément de support selon la revendication 1, **caractérisé en ce que** par injection des nervures de renfort (10) sur le corps de base (3), l'évidement (14) est rempli de la matière plastique, ce qui fait qu'à l'intérieur de l'évidement (14) est formé un tenon de matière plastique (15) qui est relié à la couche plastique (6) du corps de base (3), pour ancrer les nervures de renfort (10) sur le corps de base (3).
